# EUROPÄISCHE PATENTSCHRIFT

(11) **EP 2 713 122 B1**
(45) Veröffentlichungstag und Bekanntmachung des Hinweises auf die Patenterteilung: **19.08.2020**
(21) Anmeldenummer: 13184425.0
(22) Anmeldetag: 13.09.2013
(51) Int. Cl.: F25D 16/00, F25D 11/00

(54) **EINRICHTUNG ZUR BESTIMMUNG DES LADEZUSTANDS EINES SEGMENTIERTEN THERMISCHEN SPEICHERS**
DEVICE FOR DETERMINING THE CHARGE STATUS OF A SEGMENTED THERMAL STORAGE DEVICE
DISPOSITIF DE DÉTERMINATION DE L'ÉTAT DE CHARGE D'UN ACCUMULATEUR THERMIQUE SEGMENTÉ

(30) Priorität: 27.09.2012 DE 202012103718 U
(43) Veröffentlichungstag der Anmeldung: 02.04.2014
(73) Patentinhaber: Viessmann Kühlsysteme GmbH, 95030 Hof (DE)
(72) Erfinder: Gebelein, Bernd, 95179 Geroldsgrün (DE); Römer, Siegfried, 01477 Arnsdorf (DE)
(74) Vertreter: Pröll, Jürgen

(56) Entgegenhaltungen:
- GB-A- 2 459 955
- JP-A- 2005 326 078
- JP-A- 2012 007 796
- US-A1- 2012 227 926

## Beschreibung

Die vorliegende Erfindung betrifft eine Einrichtung zur Bestimmung des Ladezustands eines thermischen Speichers.

Aus dem Stand der Technik sind verschiedene Kühleinrichtungen mit einem Kältespeicher bekannt. In diesen Kältespeichern wird ein Kühlmittel bevorratet, um dieses entweder später einem Verdampfer zuzuführen oder zum Kühlen eines weiteren Kühlmittels zu verwenden. Jedoch ergibt sich bei diesen Kältespeichern das Problem der Bestimmung des Ladezustands des Kältespeichers. Bei kleineren Einrichtungen wie beispielsweise Kühlschränken, sind solche Vorhersagen bzw. Bestimmungen nicht in dem Maße relevant wie bei begehbaren Kühlräumen, da der relativ kleine zu kühlende Raum durch konstruktive Maßnahmen für eine bestimmte Zeit die Temperatur in dem Raum unter einem bestimmten Grenzwert halten kann. Dazu ist beispielsweise das Gehäuse mit entsprechenden Kältespeichern und Materialien ausgestaltet.

DE 27 26 954 A1 offenbart ein Tiefkühlgerät mit einer elektrisch angetriebenen Kältemaschine und einem Kältespeicher, wobei der Kältespeicher ein Latentwärmespeicher ist. Die Kältemaschine wird von einem Steuergerät in Abhängigkeit des Stromtarifs und/oder der Tageszeit eingeschaltet und bei einer Temperatur unterhalb des Gefrierpunktes des Kältespeichers abgeschaltet. Hierzu ist eine Temperaturmesseinrichtung vorgesehen.

DE 10 2011 003 441 A1 offenbart einen Latentwärmespeicher mit einer Ladezustandsanzeige. Der Latentwärmespeicher kann eine Vielzahl von Speicherbehältern aufweisen, in welchen ein Latentwärmespeichermaterial enthalten ist, wobei das Latentwärmespeichermaterial in den einzelnen Speicherbehältern über eine gemeinsame Wärmetauschereinrichtung kühlbar ist. Jeder der Speicherbehälter weist eine Druckmesseinrichtung auf, die den Druck in den Speicherbehältern bestimmt. Zur Druckbestimmung wird eine bestimmte Messgasmenge in den Speicherbehälter eingebracht, bis ein Druckmessgerät einen bestimmten Druck feststellt. Über vorher bestimmte Gasvolumen in den Speicherbehältern im beladenen und entladenen Zustand wird dann der Ladezustand bestimmt.

US 6,481,216 B2 offenbart eine Kühlanlage mit drei in Reihe geschalteten Speichereinheiten, durch welche ein Fluid geführt wird.

US 5,598,712 offenbart eine Kühlanlage mit Latentwärmespeichern, wobei in einer Ausführungsform eine Vielzahl von Wassertanks vorgesehen ist, in denen gekühltes Wasser und Eis enthalten ist, wobei die Wassertanks mit einer Temperaturmesseinrichtung verbunden sind.

Die Dokumente US 2012/227926 A1 und JP 2005 326078 A offenbaren Energiespeichersysteme.

Aufgabe der vorliegenden Erfindung ist es jedoch, eine Einrichtung zur Bestimmung des Ladezustands eines thermischen Speichers für einen zu kühlenden, begehbaren Raum anzugeben, wobei der thermische Speicher aus einer Vielzahl von Speicherzellen besteht.

Die Aufgabe löst die Erfindung durch die in Anspruch 1 angegebenen Merkmale. Vorteilhafte Weiterbildungen der Erfindung sind in Unteransprüchen im Detail angegeben.

Bei einer erfindungsgemäßen Einrichtung zur Bestimmung des Ladezustands eines thermischen Speichers für einen zu kühlenden, begehbaren Raum, aufweisend eine beliebige Anzahl von Speicherzellen, in denen ein Speichermedium aufgenommen ist, wobei die in den Speicherzellen aufgenommenen Speichermedien unterschiedliche Umschlagstemperaturen/Phasenwechseltemperaturen aufweisen, ist in/an den einzelnen Speicherzellen jeweils eine Temperaturmesseinrichtung angeordnet, die die Temperatur des Speichermediums in der jeweiligen Speicherzelle erfasst und an die Einrichtung übermittelt.

Dadurch, dass in den einzelnen Speicherzellen Speichermedien mit unterschiedlichen Umschlags-/Phasenwechseltemperaturen aufgenommen sind, wobei diese Umschlags-/Phasenwechseltemperaturen der Einrichtung bekannt und in der Einrichtung hinterlegt sind, wird über die in/an den einzelnen Speicherzellen angeordneten Temperaturmesseinrichtungen eine einfache Ladezustandsbestimmung des thermischen Speichers bereitgestellt. Der Gesamtladezustand des thermischen Speichers ergibt sich dabei aus den einzelnen Speicherzuständen der jeweiligen Speicherzellen. Im einfachsten Fall wird für jede Speicherzelle ermittelt, ob die jeweilige Temperatur der jeweiligen Speicherzelle über oder unter der Umschlagstemperatur/Phasenwechseltemperatur des in der jeweiligen Speicherzelle aufgenommenen Speichermediums liegt. Ferner kann durch die Einrichtung eine Vorhersage gemacht werden, welche Kühlleistung zu einem bestimmten Zeitpunkt von dem thermischen Speicher zur Verfügung steht. Da der Einrichtung die Menge der Speichermedien in den jeweiligen Speicherzellen sowie deren Umschlagstemperatur/Phasenwechseltemperatur bekannt sind, kann sie über die Bestimmung des Zustands "geladen"/"nicht geladen" der einzelnen Speicherzellen eine Prognose für die aufbringbare Kühlleistung eines Kühlmittels liefern.

In den Speicherzellen kann eine erste Kühlleitung angeordnet sein, in der ein erstes Kühlmittel zum Kühlen des Speichermediums zuführbar ist, und die ersten Kühlleitungen der Speicherzellen können mit einer Vorrichtung zum wahlweisen Zuführen des ersten Kühlmittels verbunden sein, wobei in den Kühlzellen eine zweite Kühlleitung angeordnet ist, wobei die zweiten Kühlleitungen über eine weitere Vorrichtung mit einem Verdampfer zum Verdampfen eines zweiten in den zweiten Kühlleitungen geführten Kühlmittels verbunden sind.

Über die Vorrichtung kann den jeweiligen Speicherzellen über die ersten Kühlleitungen das erste Kühlmittel zum Kühlen der Speichermedien zugeführt werden, wobei die in den jeweiligen Speicherzellen aufgenommenen ersten Kühlleitungen über die Vorrichtung beispielsweise mit einer Kältemaschine verbunden sind. Über die zweiten Kühlleitungen, die ebenfalls in den jeweiligen Speicherzellen aufgenommen sind, und über die weitere Vorrichtung kann dem Verdampfer das zweite Kühlmittel mit der Temperatur zugeführt werden, welche in dem zu kühlenden Raum benötigt wird. Die Vorrichtungen können dabei gezielt die Zufuhr des ersten und des zweiten Kühlmittels zu den jeweiligen Speicherzellen steuern. Da in den Speicherzellen das zweite Kühlmittel auf verschiedene Temperaturen abkühlbar ist, kann auch über eine Reihen- oder Parallelschaltung ein breites Spektrum an einzustellenden Temperaturen für den zu kühlenden Raum durch entsprechende Kühlung mittels Zuführung des zweiten Kühlmittels zu bestimmten Speicherzellen erreicht werden.

Die Einrichtung kann weiter eine Steuerung aufweisen, welche das Laden/Entladen des thermischen Speichers steuert, wobei die Steuerung die Zu- und Abfuhr des ersten Kühlmittels zu den Speicherzellen und die Zu- und Abfuhr des zweiten Kühlmittels zu dem Verdampfer in Abhängigkeit der von den Temperaturmesseinrichtungen erfassten Temperaturen der einzelnen Speicherzellen steuert.

So kann die Zufuhr des ersten Kühlmittels in Abhängigkeit der Temperatur des Speichermediums in den Speicherzellen und die Zuführung des zweiten Kühlmittels aus den Speicherzellen in Abhängigkeit der Temperatur in dem zu kühlenden, begehbaren Raum sowie des Ladezustandes der Speicherzellen erfolgen. Das heißt, dass über die weitere Vorrichtung dem Verdampfer nur dann das zweite Kühlmittel aus den Speicherzellen zuführbar sein kann, wenn das Speichermedium in den jeweiligen Speicherzellen eine Temperatur aufweist, die unterhalb ihrer Umschlagstemperatur/Phasenwechseltemperatur liegt.

Ferner kann über die Vorrichtung den einzelnen Speicherzellen nur dann das erste Kühlmittel zuführbar sein, wenn die Temperatur des Speichermediums in den jeweiligen Speicherzellen über der Umschlagstemperatur/Phasenwechseltemperatur der jeweiligen Speichermedien liegt.

Die Speichermedien in den einzelnen Speicherzellen können dabei ein Phasenwechselmaterial sein. Bei einem Phasenwechselmaterial ist durch den Phasenwechsel die Speicherung einer großen Menge an thermischer Energie möglich. Dies führt in vorteilhafter Weise zu einer Verkleinerung der jeweiligen Speicherzellen.

Die Erfindung lässt sich besonders wirtschaftlich realisieren in Verbindung mit thermischen Speichern, die eine Speicherkapazität von ≥4 kWh aufweisen. Die Speicherkapazität nach oben ist nicht begrenzt. Speicher mit einer Kapazität von 50 kWh und mehr können ebenfalls zur Anwendung kommen.

Das Phasenwechselmaterial kann ein Gemisch aus Wasser und Salzen oder Alkoholen sein, dessen Phasenwechseltemperatur sich durch dessen Gemischzusammensetzung und/oder Gemischkonzentration unterscheidet.

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Figuren dargestellten Komponenten sind hierbei nicht unbedingt maßstäblich; sie können bei zu implementierenden Ausführungsformen vom Veranschaulichten abweichen.

In den Zeichnungen zeigt:

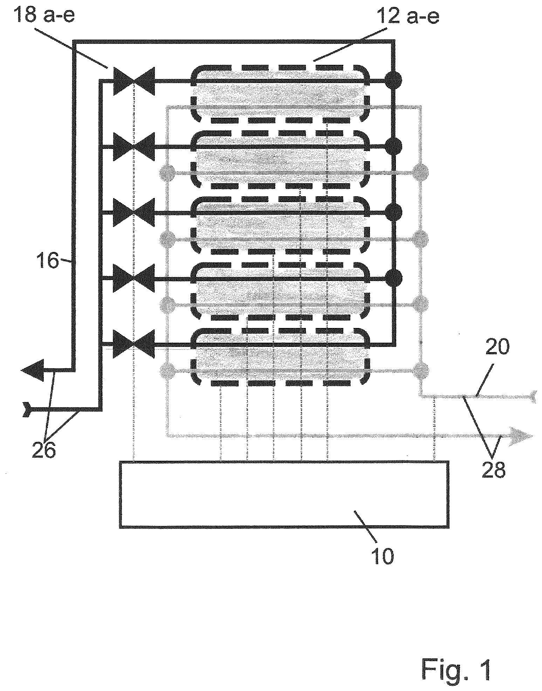

- Figur 1: eine schematische Ansicht eines thermischen Speichers mit einer Vielzahl von Speicherzellen.

Figur 1 zeigt schematisch einen thermischen Speicher mit einer beliebigen Anzahl von Speicherzellen 12a-e. In den Speicherzellen 12a-e sind Speichermedien aufgenommen, wobei sich die Speichermedien in den einzelnen Speicherzellen 12a-e in ihren Umschlagstemperaturen/Phasenwechseltemperaturen unterscheiden können. Ferner ist in den Speicherzellen 12a-e eine erste Kühlleitung 16 aufgenommen, durch welche ein erstes Kühlmittel geführt ist. Die ersten Kühlleitungen 16 sind jeweils mit Ventilen 18a-e verbunden, über die die Zufuhr bzw. das Umwälzen des ersten Kühlmittels in bzw. zu den jeweiligen Speicherzellen 12a-e gesteuert werden kann.

In den Speicherzellen 12a-e ist weiter eine zweite Kühlleitung 20 aufgenommen, die ein zweites Kühlmittel führt, um die Speicherzellen 12a-e zu entladen.

Die Ventile 18a-e sind mit einer Steuerung 10 verbunden.

In/an den einzelnen Speicherzellen 12a-e sind Temperaturmesseinrichtungen aufgenommen, welche die Temperatur der jeweils darin aufgenommenen Speichermedien ermitteln und an die Steuerung 10 übertragen. Dazu sind die Temperaturmessvorrichtungen schematisch durch die gepunktete Linie in Figur 1 dargestellt.

Da in der Steuerung 10 hinterlegt ist, welches Speichermedium in den jeweiligen Speicherzellen 12a-e aufgenommen ist, bzw. welche Umschlagstemperatur/Phasenwechseltemperatur das in den jeweiligen Speicherzellen 12a - 12e aufgenommene Speichermedium aufweist, kann die Steuerung 10 anhand der von der Temperaturmesseinrichtung aufgenommenen Temperatur ermitteln, ob das in der jeweiligen Speicherzelle 12a-e aufgenommene Speichermedium unter oder über der Umschlagstemperatur/Phasenwechseltemperatur des Speichermediums liegt. Daraus kann die Steuerung 10 auch den Ladezustand der jeweiligen Speicherzellen 12a-e bestimmen.

Liegt die von einer Temperaturmesseinrichtung ermittelte Temperatur eines Speichermediums in einer ausgewählten Speicherzelle 12a-e unter der Umschlagstemperatur/ Phasenwechseltemperatur des Speichermediums, so ist diejenige Speicherzelle 12a-e geladen. Liegt die ermittelte Temperatur jedoch über der Umschlagstemperatur/Phasenwechseltemperatur des in der jeweiligen Speicherzelle 12a-e aufgenommenen Speichermediums, so ist die jeweilige Speicherzelle 12a-e entladen.

Das erste Kühlmittel wird über die Ventile 18a-e und die ersten Kühlleitungen 16 in die Speicherzellen 12a-e geführt, um das darin aufgenommene Speichermedium zu kühlen. Die Zufuhr wird über das Öffnen und Schließen der Ventile 18a-e durch die Steuerung 10 geregelt. Die Zuführung des ersten Kühlmittels erfolgt dabei wie durch den Pfeil 26 dargestellt. Das erste Kühlmittel wird beispielsweise in einer nicht dargestellten Kältemaschine auf eine bestimmte Temperatur gebracht und dann über die Ventile 18a-e den Speicherzellen 12a-e zugeführt.

In den Speicherzellen 12a-e ist analog zu den ersten Kühlleitungen 16 auch jeweils eine zweite Kühlleitung 20 aufgenommen, wobei in den zweiten Kühlleitungen 20 ein zweites Kühlmittel geführt wird. Mittels des zweiten Kühlmittels werden die Speicherzellen 12a-e entladen. Die Zuführung des zweiten Kühlmittels erfolgt dabei wie durch den Pfeil 28 angedeutet.

Die Steuerung 10 kann den (Be-)Ladezustand des thermischen Speichers, bestehend aus den einzelnen Speicherzellen 12a-e, ermitteln, indem die einzelnen Zustände "geladen"/"entladen" der jeweiligen Speicherzellen 12a-e erfasst und ausgewertet werden. Ferner kann über die Steuerung 10 festgelegt werden, zu welchen Speicherzellen 12a-e das erste Kühlmittel zugeführt wird.

### Bezugszeichenliste

- 10: Steuerung
- 12a-e: Speicherzelle
- 16: erste Kühlleitung
- 18a-e: Ventile / Durchflussregelung
- 20: zweite Kühlleitung
- 26: Strömungsrichtung erstes Kühlmittel
- 28: Strömungsrichtung zweites Kühlmittel

## Patentansprüche

1. Einrichtung zur Bestimmung des Ladezustands eines thermischen Speichers für einen zu kühlenden, begehbaren Raum, aufweisend eine beliebige Anzahl von Speicherzellen (12a-e), in denen ein Speichermedium aufgenommen ist, wobei die in den Speicherzellen (12a-e) aufgenommenen Speichermedien unterschiedliche Phasenwechseltemperaturen aufweisen **dadurch gekennzeichnet, dass** diese Phasenwechseltemperaturen der Einrichtung bekannt und in der Einrichtung hinterlegt sind, wobei in oder an den einzelnen Speicherzellen (12a-e) Temperaturmesseinrichtungen angeordnet sind, die die Temperatur der Speichermedien und somit den Ladezustand erfassen und der Einrichtung übermitteln.

2. Einrichtung nach Anspruch 1, wobei in den Speicherzellen (12a-e) eine erste Kühlleitung (16) angeordnet ist, in der ein erstes Kühlmittel zum Kühlen des Speichermediums zuführbar ist, und die ersten Kühlleitungen (16) der Speicherzellen (12a-e) mit Ventilen zur Durchflussregelung (18a-e) zum wahlweisen Zuführen des ersten Kühlmittels verbunden sind und in den Speicherzellen (12a - 12e) eine zweite Kühlleitung (20) angeordnet ist, wobei über die zweiten Kühlleitungen (20) die Speicherzellen (12a-e) entladen werden.

3. Einrichtung nach Anspruch 2, wobei die Einrichtung eine Steuerung (10) aufweist, welche das Laden und Entladen des thermischen Speichers steuert, wobei die Steuerung (10) die Zu- und Abfuhr des ersten Kühlmittels zu den Speicherzellen (12a-e) und die Zu- und Abfuhr des zweiten Kühlmittels in Abhängigkeit der von den Temperaturmesseinrichtungen erfassten Temperaturen steuert.

4. Einrichtung nach Anspruch 3, wobei die Zuführung des ersten Kühlmittels in Abhängigkeit der Temperatur des Speichermediums in den Speicherzellen (12a-e) und die Zuführung des zweiten Kühlmittels aus den Speicherzellen (12a-e) in Abhängigkeit der Temperatur in dem zu kühlenden, begehbaren Raum sowie des Ladezustandes der Speicherzellen (12a-e) erfolgt.

5. Einrichtung nach einem der Ansprüche 2 bis 4, wobei über die Ventile zur Durchflussregelung (18a-e) den einzelnen Speicherzellen (12a-e) nur dann das erste Kühlmittel zuführbar ist, wenn die Temperatur des Speichermediums in den jeweiligen Speicherzellen (12a-e) über der Phasenwechseltemperatur liegt.

6. Einrichtung nach einem der Ansprüche 1 bis 5, wobei die Speichermedien in den einzelnen Speicherzellen (12a-e) Phasenwechselmaterialien sind.

## Claims

1. Device for determining the charge status of a thermal storage for a walk-in room to be cooled comprising an arbitrary number of storage cells (12a-e), in which a storage medium is accommodated, wherein the storage media accommodated in the storage cells (12a-e) have different phase change temperatures,
**characterized in that**
these phase change temperatures are known to the device and are stored in the device, wherein temperature measuring devices are arranged in or on the individual storage cells (12a-e), which detect the temperature of the storage media and thus the state of charge and transmit it to the device.

2. Device according to claim 1, wherein a first cooling line (16) is arranged in the storage cells (12a-e), in which a first coolant for cooling the storage medium can be supplied, and the first cooling lines (16) of the storage cells (12a-e) are connected to valves for flow control (18a-e) for selectively supplying the first coolant, and a second cooling line (20) is arranged in the storage cells (12a-e), wherein the storage cells (12a-e) are discharged via the second cooling lines (20).

3. Device according to claim 2, wherein the device comprises a controller (10) which controls the charge and discharge of the thermal storage, wherein the controller (10) controls the supply and the removal of the first coolant to the storage cells (12a-e) and the supply and the removal of the second coolant depending on the temperatures detected by the temperature measuring devices.

4. Device according to claim 3, wherein the supply of the first coolant takes place depending on the temperature of the storage medium in the storage cells (12a-e) and the supply of the second coolant from the storage cells (12a-e) takes place depending on the temperature in the walk-in room to be cooled and the state of charge of the storage cells (12a-e).

5. Device according to any one of claims 2 to 4, wherein the first coolant can only be supplied to the individual storage cells (12a-e) via the valves for flow control (18a-e) if the temperature of the storage medium in the respective storage cells (12a-e) is above the phase change temperature.

6. Device according to any one of claims 1 to 5, wherein the storage media in the individual storage cells (12a-e) are phase change materials.

## Revendications

1. Dispositif de détermination de l'état de charge d'un accumulateur thermique destiné à un local accessible à refroidir, comprenant un nombre quelconque de cellules accumulatrices (12a-e) dans lesquelles est reçu un milieu accumulateur, dans lequel les milieux accumulateurs reçus dans les cellules accumulatrices (12a-e) présentent des températures de changement de phase différentes, **caractérisé en ce que**
lesdites températures de changement de phase sont connues du dispositif et sont stockées dans le dispositif, dans lequel des dispositifs de mesure de température sont agencés dans ou sur les cellules accumulatrices (12a-e) individuelles qui détectent la température des milieux accumulateurs et donc l'état de charge et le transmettent au dispositif.

2. Dispositif selon la revendication 1, dans lequel une première conduite de refroidissement (16) est agencée dans les cellules accumulatrices (12a-e) dans laquelle peut être amené un premier fluide de refroidissement pour le refroidissement du milieu accumulateur, et les premières conduites de refroidissement (16) des cellules accumulatrices (12a-e) sont reliées à des vannes de régulation de débit (18a-e) destinées à l'introduction sélective du premier fluide de refroidissement, et une seconde conduite de refroidissement (20) est prévue dans les cellules accumulatrices (12a-12e), dans lequel les cellules accumulatrices (12a-e) sont déchargées par l'intermédiaire des secondes conduites de refroidissement (20).

3. Dispositif selon la revendication 2, dans lequel le dispositif comprend une unité de commande (10) qui commande la charge et la décharge de l'accumulateur thermique, dans lequel l'unité de commande (10) commande l'apport et l'évacuation du premier fluide de refroidissement vers les cellules accumulatrices (12a-e) et l'apport et l'évacuation du second fluide de refroidissement en fonction des températures détectées par les dispositifs de mesure de température.

4. Dispositif selon la revendication 3, dans lequel l'apport du premier fluide de refroidissement s'effectue en fonction de la température du milieu accumulateur dans les cellules accumulatrices (12a-e) et l'apport du second fluide de refroidissement à partir des cellules accumulatrices (12a-e) s'effectue en fonction de la température dans le local accessible à refroidir et de l'état de charge des cellules accumulatrices (12a-e).

5. Dispositif selon l'une des revendications 2 à 4, dans lequel le premier fluide de refroidissement ne peut être amené aux cellules accumulatrices (12a-e) individuelles par l'intermédiaire des vannes de régulation de débit (18a-e) que lorsque la température du milieu accumulateur dans les cellules accumulatrices (12a-e) respectives est supérieure à la température de changement de phase.

6. Dispositif selon l'une des revendications 1 à 5, dans lequel les milieux accumulateurs contenus dans les cellules accumulatrices (12a-e) individuelles sont des matériaux à changement de phase.
